(19) Europäisches Patentamt
European Patent Office
Office européen des brevets

(11) **EP 0 650 924 B1**

(12) **EUROPÄISCHE PATENTSCHRIFT**

(45) Veröffentlichungstag und Bekanntmachung des Hinweises auf die Patenterteilung:
**27.11.1996 Patentblatt 1996/48**

(51) Int. Cl.$^6$: **C01B 6/06**

(21) Anmeldenummer: **94113920.6**

(22) Anmeldetag: **06.09.1994**

(54) **Verfahren zur Herstellung von Aluminiumwasserstoff (AlH3) durch Umsetzung von Magnesiumhydrid mit Aluminiumhalogenid**

Process for the preparation of aluminium hydride (AlH3) by the reaction of magnesium hydride with aluminium halide

Procédé de préparation d'hydrure d'aluminium (AlH3) par la réaction d'hydrure de magnésium et d'un halogénure d'aluminium

(84) Benannte Vertragsstaaten:
**BE DE FR GB IT NL**

(30) Priorität: **27.10.1993 DE 4336602**

(43) Veröffentlichungstag der Anmeldung:
**03.05.1995 Patentblatt 1995/18**

(73) Patentinhaber: **Th. Goldschmidt AG**
**D-45127 Essen (DE)**

(72) Erfinder: **Knott, Wilfried, Dr.**
**D-45141 Essen (DE)**

(56) Entgegenhaltungen:
**FR-A- 2 245 569**        **US-A- 3 857 930**
**US-A- 4 006 095**

EP 0 650 924 B1

**Beschreibung**

Die Erfindung betrifft ein Verfahren zur Herstellung von Aluminiumwasserstoff ($AlH_3$) durch Umsetzung von Magnesiumhydrid mit Aluminiumhalogenid in Gegenwart von Lösungsmitteln.

Finholt, Bond und Schlesinger (J. Am. Chem. Soc. 69, 1199 (1947)) beschreiben die Herstellung von Aluminiumwasserstoff $AlH_3$ in Diethylether aus $AlCl_3$ und LiH gemäß

$$AlCl_3 + 3\ LiH \rightarrow AlH_3 + 3\ LiCl$$

Diese Reaktion geht jedoch leicht bis zum Lithiumaluminiumhydrid $LiAlH_4$ durch, das sich in exothermer Reaktion gemäß

$$AlH_3 + LiH \rightarrow LiAlH_4$$

bildet.

Zweckmäßiger stellt man entsprechend Ullmann's Encyclopedia of Industrial Chemistry, Vol. A 13, S. 213 - 214 Aluminiumhydrid ausgehend von Lithiumalanat durch Reaktion mit Aluminiumchlorid oder Mineralsäuren in Diethylether dar

$$3\ LiAlH_4 + AlCl_3 \rightarrow 4\ AlH_3 + 3\ LiCl$$

$$LiAlH_4 + HX \rightarrow AlH_3 + LiX + H_2$$

(HX = HCl oder $H_2SO_4$).

Die Verwendung des aufwendigen und in seiner Handhabung nicht ungefährlichen Lithiumaluminiumhydrids ist bei dieser Synthese nachteilig.

Man hat daher frühzeitig versucht, das komplexe Hydrid $LiAlH_4$ durch andere Lithium-freie Hydride zu ersetzen und so $AlH_3$ zugänglich zu machen.

So ist aus der US-PS 3 829 390 die Herstellung von stabilen Chlorid- und Lithiumsalz-freien $AlH_3$-Lösungen in niederen Dialkylethern unter Verwendung von Natriumaluminiumhydrid gemäß

$$3\ NaAlH_4 + AlCl_3 \rightarrow 4\ AlH_3 + 3\ NaCl$$

bekannt. Die Vermeidung der Verwendung von Lithium enthebt dieses Verfahren jedoch nicht der Notwendigkeit, ein auf aufwendigem Wege erzeugtes Alkalialuminiumhydrid einsetzen zu müssen.

Es hat nicht an Versuchen gefehlt, Magnesiumhydrid zur Herstellung von Aluminiumwasserstoff bzw. hieraus abgeleiteten Verbindungen zu verwenden.

Wiberg und Bauer gelangten zu der Auffassung, daß die Schlesinger-analoge Reaktion mit $MgH_2$ in Diethylether Magnesiumaluminiumwasserstoff der Formel $Mg(AlH_4)_2$ hervorbringt (Zeitschrift für Naturforschung 5b, 397 (1950) und 4b, 131 (1952) sowie DE-PS 845 338). Ashby belegte jedoch später in Inorg. Chem. 9, S. 325 - 326 (1970), daß bei dieser Reaktion hydrogenolytisch aus Grignard- bzw. Diorganomagnesiumverbindungen erzeugtes $MgH_2$ mit Aluminiumhalogenid zum Halogenmagnesiumalanat $XMgAlH_4$ reagiert.

Aus der BE-PS 785 348 ist ein Verfahren zur Herstellung von $AlH_3$ bzw. $Mg(AlH_4)_2$ durch Reaktion von $MgH_2$ mit $AlCl_3$ in Gegenwart von Aluminium in Diethylether bekannt:

$$2\ AlCl_3 + 3\ MgH_2 + Al \rightarrow 2\ AlH_3 + 3\ MgCl_2 + Al$$

$$2\ AlCl_3 + 4\ MgH_2 + Al \rightarrow 2\ Mg(AlH_4)_2 + 3\ MgCl_2 + Al$$

Experimenteller Nachweis zum Beweis des Ablaufes der Reaktion und zur Natur der Verfahrensprodukte wurde nicht gegeben, was bereits Ashby (loc.cit.) bemängelte.

Das Verfahren des US-Patentes 4 832 934 greift erneut die Reaktion von $MgH_2$ mit Aluminiumhalogenid in cyclischen oder aliphatischen Ethern auf, wobei das hier verwendete hochaktive $MgH_2$ gemäß einem Verfahren der EP-PS 0 003 564 hergestellt wird. Die Umsetzung dieses besonderen, durch komplexe Katalysatorsysteme zugänglichen Magnesiumhydrids mit Aluminiumhalogenid führt zu Verbindungen der allgemeinen Formel

$$[Mg_2X_3(Ether)_y]^+[AlH_4]^-$$

2

wobei X ein Halogen, Ether ein cyclischer oder aliphatischer Ether und y eine Zahl von 0 bis 6 ist. Dabei wird in der US-PS ausdrücklich darauf hingewiesen, daß dieses Produkt unter Verwendung von handelsüblichem $MgH_2$ trotz Aufmahlung, also mechanischer Aktivierung, nicht hergestellt werden kann. Dies wird auch in einem Vergleichsbeispiel gezeigt. Die Verwendung der in der EP-PS 0 003 564 beschriebenen komplexen Katalysatorsysteme zur Herstellung von aktivem Magnesiumhydrid ist bei diesem Verfahren somit zwingend erforderlich. Durch Zusatz von Dioxan ist es möglich, aus dem vorgenannten Verfahrensprodukt 1 Mol $MgCl_2$ abzutrennen. Man erhält dann ein Produkt der Formel $XMgAlH_4$. $AlH_3$ läßt sich auf diesem Wege somit nicht herstellen.

Die DE-A-4 235 334 befaßt sich mit dem Problem, billige und nach der Lehre der US-PS 4 832 934 infolge ihrer Inaktivität unbrauchbare Magnesiumhydride, die unter Verzicht auf die vorgenannten komplexen Katalysatoren bei hohen Temperaturen aus den Elementen gewonnen werden, für die Herstellung komplexer Halogen-Magnesium-Aluminiumhydridohalogenide einzusetzen. Durch Aufmahlung von Magnesiumhydrid mit Aluminiumhalogenid in aliphatischen oder cycloaliphatischen Ethern mit 2 bis 30 Kohlenstoffatomen (ausgenommen tert.-Butylether und 1,4-Dioxan) entstehen abweichend von der Lehre der US-PS 4 832 934 Verbindungen der allgemeinen Formel

$$[Mg_2X_3(Ether)_y]^+[AlH_{4-n}X_n]^-$$

wobei X Halogen, y eine Zahl von 0 bis 6, n eine Zahl von 1 bis 3 und Ether ein aliphatischer oder cycloaliphatischer Ether mit 2 bis 30 Kohlenstoffatomen (ausgenommen tert.-Butylether und 1,4-Dioxan) ist.

Dabei hat sich bei diesem Verfahren $MgH_2$, welches nach dem Verfahren der DE-OS 40 39 278 hergestellt worden ist, als besonders brauchbar erwiesen. Bei dem Verfahren der DE-OS 40 39 278 wird als Katalysator für die Hydrierung des Magnesiums $MgH_2$ verwendet, welches dem zu hydrierenden Magnesium vor Beginn der Reaktion in Mengen von mindestens 1,2 Gew.-% und mit einer Teilchengröße von $\leq$ 400 µm zugesetzt wird. Im folgenden wird dieses Magnesiumhydrid als "autokatalytisch hergestelltes Magnesiumhydrid" bezeichnet.

Die vorliegende Erfindung befaßt sich mit dem technischen Problem, Aluminiumwasserstoff $AlH_3$ in wirtschaftlicher Weise, unter Vermeidung der Verwendung komplexer Katalysatoren und unter Verwendung von einfach zugänglichem Magnesiumhydrid in guten Ausbeuten und mit hoher Reinheit herzustellen. Das Aluminiumhydrid soll dabei frei von Magnesiumhalogenid sein.

Überraschenderweise wurde gefunden, daß die Lösung dieses technischen Problems durch ein Verfahren gelingt, welches erfindungsgemäß dadurch gekennzeichnet ist, daß man Magnesiumhydrid verwendet, welches durch Umsetzung von Magnesium mit Wasserstoff bei einer Temperatur von $\geq$ 250°C und einem Druck von 0,5 bis 5 MPa unter der Maßgabe erhältlich ist, daß man dem zu hydrierenden Magnesium vor der Hydrierung Magnesiumhydrid einer Teilchengröße von $\leq$ 400 µm in Mengen von mindestens 1,2 Gew.-%, bezogen auf zu hydrierendes Magnesium, zusetzt, und die Reaktion unter ständiger Aufmahlung der Reaktionsprodukte $MgH_2$ und $AlX_3$ (X = Halogen) im Molverhältnis von mindestens 3 : 2 in 1,4-Dioxan innerhalb eines Temperaturbereiches von 20° bis 110°C während eines Zeitraumes von 30 Minuten bis 5 Stunden durchführt.

Vorzugsweise führt man die Reaktion innerhalb eines Temperaturbereiches von 40° bis 100°C durch.

Bei der Auswahl der Reaktionstemperatur und der Reaktionsdauer ist zu beachten, daß einerseits mit steigender Reaktionstemperatur die Reaktionsgeschwindigkeit zunimmt, andererseits gebildetes $AlH_3$ sich bei steigender Temperatur zunehmend zersetzt. Führt man das erfindungsgemäße Verfahren zum Beispiel bei 60°C durch, ist eine Reaktionsdauer von etwa 4 bis 5 Stunden zur Bildung des $AlH_3$ erforderlich. Eine Zersetzung des gebildeten $AlH_3$ findet jedoch nicht oder zumindest nicht in nennenswertem Umfang statt. Bei einer Reaktionstemperatur von etwa 100°C ist die Bildung des $AlH_3$ nach etwa 30 Minuten beendet. Läßt man die erhaltene Lösung des $AlH_3$ in Dioxan jedoch noch etwa 1 Stunde bei dieser Temperatur, hat sich das gebildete $AlH_3$ fast quantitativ wieder zersetzt. Diese Zersetzung wird natürlich auch durch die Größe, das Material und die Geometrie des Reaktionsgefäßes beeinflußt. Es ist deshalb zu empfehlen, insbesondere bei Wahl höherer Reaktionstemperaturen, den Fortgang der Reaktion zu kontrollieren und nach Erreichen des gewünschten Umsatzes durch Abkühlen der Lösung eine Zersetzung des gebildeten $AlH_3$ zu vermeiden.

Durch die ständige Aufmahlung wird dafür Sorge getragen, daß die Oberfläche des $MgH_2$ fortwährend erneuert wird und das Hydrid mechanisch aktiviert wird.

Die Verwendung von 1,4-Dioxan mit einem Dipolmoment von 0 Debye hat sich als wichtig erwiesen, da die Reaktion bei Verwendung von Ethern mit einem Dipolmoment > 0,5 Debye (ausgenommen tert.-Butylether) in eine andere Richtung gelenkt wird und Halogen-Magnesium-Aluminiumhydridohalogenide entstehen.

Das theoretisch einzuhaltende Molverhältnis der Reaktionspartner $MgH_2$ : $AlCl_3$ beträgt 3 : 2. Jedoch ist die Verwendung eines gewissen Überschusses an $MgH_2$ durchaus sinnvoll. Der nicht umgesetzte Anteil $MgH_2$ kann in einfacher Weise, z.B. durch Abfiltrieren oder Zentrifugieren, entfernt werden.

Es ist nicht in jedem Falle notwendig, den Aluminiumwasserstoff aus seiner Lösung in 1,4-Dioxan zu isolieren, da für die Reduktion organischer Verbindungen die Lösung des Aluminiumwasserstoffes in 1,4-Dioxan unmittelbar verwendet werden kann.

Das erfindungemäße Verfahren verbindet durch Verwendung des autokatalytisch hergestellten, nichtpyrophoren und leicht zu handhabenden Magnesiumhydrids den Gesichtspunkt der Verfahrenssicherheit mit dem der Wirtschaftlichkeit. Mit dem erfindungsgemäßen Verfahren wird erstmalig die Möglichkeit einer breiten Verfügbarkeit von Aluminiumwasserstoff AlH$_3$ eröffnet, wie sie gemäß Ullmann (loc.cit.) bisher nicht gegeben war.

Die folgenden Beispiele dienen der weiteren Erläuterung des erfindungsgemäßen Verfahrens und belegen die technische Anwendbarkeit des erfindungsgemäß hergestellten Aluminiumwasserstoffs zur Reduktion funktioneller organischer Verbindungen.

A. Beispiele für das erfindungsgemäße Verfahren

Beispiel 1

9,37 g (0,32 Mol) autokatalytisch hergestelltes Magnesiumhydrid (Hydridgehalt 90 %) werden zusammen mit 21,36 g (0,16 Mol) Aluminiumchlorid in einer Glaskugelmühle vorgelegt und mit 463,5 g 1,4-Dioxan versetzt. Unter ständiger Aufmahlung wird der Reaktionsansatz für 30 Minuten auf Rückflußtemperatur erhitzt. Mittels einer Spritze wird eine Probe aus dem Reaktor entnommen und zentrifugiert. Aliquote Teile des so erhaltenen klaren Überstandes werden zur komplexometrischen Bestimmung von Aluminium und Magnesium sowie zur gasvolumetrischen Wasserstoffbestimmung verwendet.

Die Analytik belegt einen Aluminiumgehalt von 0,33 mMol Al/g Lösung und hierzu korrespondierend einen Hydridgehalt von 0,80 mMol H/g (entsprechend 77 % der Theorie, bezogen auf eingesetztes AlCl$_3$). Magnesium ist in der Lösung nicht nachweisbar und eine potentiometrische Chloridbestimmung belegt Halogenidfreiheit.

Eine Fortsetzung der Reaktion unter Rückflußbedingungen und weiterem, ständigem Aufmahlen führt zu einem Abbau des ursprünglich gebildeten Aluminiumwasserstoffs, was sowohl durch die gasvolumetrische Hydridbestimmung als auch durch die hierzu parallel durchgeführte komplexometrische Titration von Aluminium untermauert wird:

| Reaktionszeit Minuten | Hydridgehalt mMol/g | Al-Gehalt mMol/g |
|---|---|---|
| 60 | 0,19 | 0,070 |
| 90 | 0,01 | 0,006 |
| 120 | < Nachweisgrenze | < Nachweisgrenze |

Beispiel 2

6,69 g (0,244 Mol) eines 96 %igen autokatalytisch hergestellten Magnesiumhydrids werden zusammen mit 21,7 g (0,163 Mol) Aluminiumchlorid in 463,5 g 1,4-Dioxan in einer Glaskugelmühle unter ständiger Aufmahlung auf 100°C erhitzt.

Nach einer Reaktionszeit von 30 Minuten wird die erhitzte Reaktionsmischung über eine P4-Schutzgasfritte filtriert und eine Probe des klaren Filtrats einer gasvolumetrischen Wasserstoffbestimmung unterzogen.

Der Hydridgehalt beträgt 0,77 mMol H$^-$/g (73 % der Theorie).

Eine komplexometrische Aluminiumbestimmung ergibt eine Aluminiumkonzentration von 0,33 mMol Al$^{3+}$/g.

Der Magnesiumgehalt dieses Filtrats liegt unterhalb der für die komplexometrische Bestimmung von Mg$^{2+}$ üblichen Erfassungsgrenze.

Beispiel 3

6,97 g (0,254 Mol) eines 96 %igen autokatalytisch hergestellten Magnesiumhydrids werden zusammen mit 22,6 g (0,169 Mol) Aluminiumchlorid in 463,5 g 1,4-Dioxan bei 80°C unter ständiger Aufmahlung in einer Glaskugelmühle zur Reaktion gebracht.

Mit Hilfe einer Spritze werden dem Ansatz reaktionsbegleitend Proben entnommen und zentrifugiert. Der erhaltene klare überstand wird auf seinen jeweiligen Aluminium- und Hydridgehalt untersucht.

Die Probenahme verdeutlicht folgenden Reaktionsverlauf:

| Reaktionszeit Minuten | Hydridgehalt mMol/g | Al-Gehalt mMol/g |
|---|---|---|
| 30 | 0,39 | 0,35 |
| 60 | 0,85 | 0,34 |
| 90 | 0,82 | 0,28 |
| 120 | 0,67 | 0,22 |

Eine komplexometrische Bestimmung von Magnesium belegt, daß der Mg-Gehalt der Endprobe unterhalb der analytischen Nachweisgrenze liegt. Eine parallel hierzu durchgeführte potentiometrische Chloridbestimmung zeigt ebenfalls Chloridfreiheit an.

Beispiel 4

In einer Glaskugelmühle werden 8,94 g (0,326 Mol) eines 96 %igen autokatalytisch hergestellten Magnesiumhydrids mit 29,0 g (0,217 Mol) Aluminiumchlorid in 462 g 1,4-Dioxan unter ständiger Aufmahlung auf 60°C erhitzt. Mittels einer Spritze werden reaktionsbegleitend Proben aus dem Reaktionsansatz gezogen und zentrifugiert. Der erhaltene klare Überstand wird aliquotiert, wobei ein Teil zur gasvolumetrischen Wasserstoffbestimmung und der andere Teil zur komplexometrischen Bestimmung von Aluminium verwendet wird. Hierbei ergibt sich folgender Reaktionsverlauf:

| Reaktionszeit Minuten | Hydridgehalt mMol/g | Al-Gehalt mMol/g |
|---|---|---|
| 30 | 0,06 | 0,42 |
| 60 | 0,17 | 0,41 |
| 120 | 0,62 | 0,37 |
| 180 | 1,12 | 0,45 |
| 240 | 1,30 | 0,41 |
| 300 | 1,33 | 0,40 |
| 360 | 1,32 | 0,42 |

Der Hydridgehalt nach 300 Minuten entspricht einer 96 %igen Ausbeute. Nach 360 Minuten werden weitere Proben sowohl zur komplexometrischen Magnesiumbestimmung als auch zur potentiometrischen Chloridbestimmung gezogen. Es kann weder $Mg^{2+}$ noch $Cl^-$ gefunden werden.

B. Beispiele für die Verwendung des erfindungsgemäß hergestellten $AlH_3$ als Reduktionsmittel

Beispiel 5

Dem Beispiel 1 folgend wird eine 0,49 mMol $H^-$/g enthaltende Aluminiumwasserstofflösung in 1,4-Dioxan hergestellt. 101,9 g dieser Lösung werden unter Magnetrührung bei 80°C in einem Mehrhalskolben vorgelegt. 2,4 g (0,02 Mol) Acetophenon werden langsam hinzugetropft, wobei die Temperatur des Reaktionsansatzes auf 90°C ansteigt. Nach beendeter Zugabe wird der Ansatz 1 Stunde bei 80°C nachgerührt.

Die Reaktionsmischung wird zügig mit eisgekühlter, verdünnter HCl hydrolysiert, mit NaCl ausgesalzen und dreimal mit kleinen Portionen Ether extrahiert. Die vereinigten Extrakte werden über $Na_2SO_4$ getrocknet und eingeengt. Der Rückstand wird $^1$H-NMR-spektroskopisch analysiert. Die Spektroskopie belegt eine Ausbeute von 94 % 1-Phenylethanol (bezogen auf eingesetztes Acetophenon).

Beispiel 6

101,9 g (0,05 Mol H$^-$) der im Beispiel 5 verwendeten AlH$_3$-Lösung in 1,4-Dioxan werden unter Magnetrührung bei 80°C vorgelegt. 3,64 g (0,02 Mol) Benzophenon werden in 20 g 1,4-Dioxan gelöst. Diese Lösung wird langsam dem vorgelegten AlH$_3$ hinzugetropft. Die Exothermie der einsetzenden Reaktion erwärmt den Ansatz auf 100°C, wobei ein Gasen zu beobachten ist.

Nach beendeter Zugabe wird 1 Stunde bei 80°C nachgerührt und analog Beispiel 2 hydrolytisch aufgearbeitet.

Die $^1$H-NMR-Spektroskopie belegt eine 40 %ige Ausbeute von Diphenylmethanol (bezogen auf eingesetztes Benzophenon).

Beispiel 7

99,4 g (0,049 Mol H$^-$) der in Beispiel 5 und 6 verwendeten AlH$_3$-Stammlösung in 1,4-Dioxan werden unter Magnetrührung bei 80°C vorgelegt. 1,91 g (0,019 mMol) α-Angelicalacton werden langsam hinzugetropft, wobei eine heftige Reaktion einsetzt, die mit einem Temperaturanstieg auf 100°C einhergeht. Nach beendeter Zugabe wird der Ansatz unter weiterem Rühren 1 Stunde bei 80°C belassen.

Die Aufarbeitung erfolgt im Einklang mit den vorhergehenden Beispielen. Die Ausbeute an 1,4-Pentandiol beträgt 95 % gemäß $^1$H-NMR-Analytik (bezogen auf eingesetztes α-Angelicalacton).

Beispiel 8

174,3 g einer gemäß Beispiel 1 bereitgestellten 0,70 mMol H$^-$/g enthaltenden Aluminiumwasserstofflösung in 1,4-Dioxan (≈ 122,0 mMol H$^-$) werden unter Magnetrührung bei Raumtemperatur vorgelegt. 5,0 g (71,3 mMol) Crotonaldehyd werden im Laufe einer Stunde hinzugetropft, wobei die Temperatur des Reaktionsansatzes auf 52°C ansteigt. Gleichzeitig wird eine Fällung beobachtet. Eine Stunde wird der Ansatz nachgerührt und dann wie in den vorhergehenden Beispielen aufgearbeitet. Die $^1$H-NMR-Analytik belegt eine Produktzusammensetzung von 43 % Crotylalkohol neben 57 % n-Butanol (bezogen auf eingesetzten Crotonaldehyd).

**Patentansprüche**

1. Verfahren zur Herstellung von Aluminiumwasserstoff (AlH$_3$) durch Umsetzung von Magnesiumhydrid mit Aluminiumhalogenid, in Gegenwart von Lösungsmitteln, dadurch gekennzeichnet, daß man Magnesiumhydrid verwendet, welches durch Umsetzung von Magnesium mit Wasserstoff bei einer Temperatur von ≧ 250°C und einem Druck von 0,5 bis 5 MPa unter der Maßgabe erhältlich ist, daß man dem zu hydrierenden Magnesium vor der Hydrierung Magnesiumhydrid einer Teilchengröße von ≦ 400 μm in Mengen von mindestens 1,2 Gew.-%, bezogen auf zu hydrierendes Magnesium, zusetzt, und die Reaktion unter ständiger Aufmahlung der Reaktionsprodukte MgH$_2$ und AlX$_3$ (X = Halogen) im Molverhältnis von mindestens 3 : 2 in 1,4-Dioxan innerhalb eines Temperaturbereiches von 20° bis 110°C während eines Zeitraumes von 30 Minuten bis 5 Stunden durchführt.

2. Verfahren nach Anspruch 1, dadurch gekennzeichnet, daß man die Reaktion innerhalb eines Temperaturbereiches von 40° bis 100°C durchführt.

**Claims**

1. Process for preparing aluminium hydride (AlH$_3$) by reacting magnesium hydride with aluminium halide in the presence of solvents, characterized in that the magnesium hydride used is obtainable by reacting magnesium with hydrogen at a temperature of ≧ 250°C and a pressure of from 0.5 to 5 MPa with the proviso that magnesium hydride having a particle size of ≦ 400 μm is added prior to the hydrogenation to the magnesium to be hydrogenated in amounts of at least 1.2 % by weight, based on magnesium to be hydrogenated, and in that the reaction is carried out with continual milling of the reaction products MgH$_2$ and AlX$_3$ (X = halogen) in a molar ratio of at least 3:2 in 1,4-dioxane within a temperature range from 20° to 110°C over a period of from 30 minutes to 5 hours.

2. Process according to Claim 1, characterized in that the reaction is carried out within a temperature range from 40° to 100°C.

**Revendications**

1. Procédé de préparation d'hydrure d'aluminium (AlH$_3$) par réaction d'hydrure de magnésium avec un halogénure d'aluminium, en présence de solvants, caractérisé en ce qu'on utilise de l'hydrure de magnésium qu'on peut obtenir par réaction de magnésium avec de l'hydrogène à une température $\geqq$ 250°C et à une pression de 0,5 à 5 MPa, avec la condition d'ajouter au magnésium à hydrogéner, avant son hydrogénation, de l'hydrure de magnésium ayant une dimension de particules $\leqq$ 400 $\mu$m, en des quantités d'au moins 1,2 % en poids par rapport au magnésium à hydrogéner, et d'effectuer la réaction avec broyage continu des produits de réaction $MgH_2$ et $AlX_3$ (X = halogène) à un rapport molaire d'au moins 3 : 2, dans du 1,4-dioxanne, dans une plage de température de 20°C à 110°C, pendant un laps de temps de 30 minutes à 5 heures.

2. Procédé selon la revendication 1, caractérisé en ce qu'on effectue la réaction à une température comprise entre 40°C et 110°C.